# EUROPÄISCHE PATENTSCHRIFT

(11) **EP 2 941 825 B1**
(45) Veröffentlichungstag und Bekanntmachung des Hinweises auf die Patenterteilung: **26.02.2020**
(21) Anmeldenummer: 13811384.0
(22) Anmeldetag: 14.12.2013
(51) Int. Cl.: H02P 6/00, B60L 13/03, H02K 41/00, H02P 25/06

(54) **VERFAHREN ZUM BETREIBEN EINER LINEARMOTORANORDNUNG UND LINEARMOTORANORDNUNG**
METHOD FOR OPERATING A LINEAR MOTOR ARRANGEMENT AND LINEAR MOTOR ARRANGEMENT
PROCÉDÉ POUR FAIRE FONCTIONNER UN DISPOSITIF DE MOTEUR LINÉAIRE ET DISPOSITIF DE MOTEUR LINÉAIRE

(30) Priorität: 22.12.2012 DE 102012025323
(43) Veröffentlichungstag der Anmeldung: 11.11.2015
(73) Patentinhaber: Festo AG & Co. KG, 73734 Esslingen (DE)
(72) Erfinder: KADYNSKI, Dominic, D-73230 Kirchheim (DE); REIMER, Jan, D-73734 Esslingen (DE); KLEIN, Benjamin, D-73079 Süßen (DE); HARTRAMPH, Ralf, 73095 Albershausen (DE)
(74) Vertreter: Patentanwälte Magenbauer & Kollegen Partnerschaft mbB
(86) Internationale Anmeldenummer: PCT/EP2013/003779
(87) Internationale Veröffentlichungsnummer: WO 2014/095017

(56) Entgegenhaltungen:
- DE-A1- 4 305 274
- DE-A1-102008 008 602

## Beschreibung

Die Erfindung betrifft ein Verfahren zum Betreiben einer Linearmotoranordnung. Ferner betrifft die Erfindung eine Linearmotoranordnung.

Gemäß einem der Anmelderin bekannten, druckschriftlich nicht niedergelegten Stand der Technik erfolgt eine Ansteuerung mehrerer jeweils mit einer oder mehreren individuell ansteuerbaren Magnetspulen ausgerüsteter und längs einer Bewegungsbahn angeordneter Statorsegmente mittels einer Kontrolleinrichtung, die mit jeweils den Statorsegmenten zugeordneten Wegmesssystemen gekoppelt ist und die eine geregelte Bereitstellung elektrischer Energie an die jeweiligen Statorsegmente in Abhängigkeit von einer Position des wenigstens einen Transportmittels vornimmt.

Die DE 10 2008 008 602 A1 offenbart eine Transfervorrichtung für Werkstückträger mit mehreren Segmenten, in denen jeweils eine Steuereinheit einen Linearmotor ansteuert, wobei in einer Phase der Übergabe des Werkstückträgers von einem ersten Segment zu einem benachbarten Segment eine Synchronisierung der Linearmotoren nicht mehr aufgrund von Steuerbefehlen einer zentralen Steuereinrichtung bewirkt, sondern die Steuereinheit des ersten Segments macht sich selbst zum Master und unterwirft die Steuereinheit des benachbarten Segments als Slave. Eine Positionsmessvorrichtung ermöglicht es, dass die Master-Steuereinheit eine Geschwindigkeitsregelung für den Werkstückträger durchführt. Die Steuereinheit erhält Informationen über den Kommutierungswinkel und den Kraftistwert und kann so im Sinne der Regelung die Steuerbefehle an den zugehörigen Linearmotor abgeben.
Die Aufgabe der Erfindung besteht darin, ein Verfahren zum Betreiben einer Linearmotoranordnung und eine Linearmotoranordnung bereitzustellen, die bei einer vereinfachten Aufbauweise eine ähnliche Leistungsfähigkeit wie die aus dem Stand der Technik bekannte Linearmotoranordnung aufweist.
Diese Aufgabe wird gemäß einem ersten Erfindungsaspekt für ein Verfahren zum Betreiben einer Linearmotoranordnung mit den Merkmalen des Anspruchs 1 gelöst.
Hierbei sind die folgenden Schritte vorgesehen: gesteuerte Einleitung elektrischer Energie an ein erstes mit Magnetspulen ausgerüstetes Statorsegment zur gesteuerten Bereitstellung eines Magnetfelds an eine Permanentmagnetanordnung eines Transportmittels zur Erzeugung von Antriebskräften, geregelte Einleitung elektrischer Energie an ein zweites, mit einer Messeinrichtung für eine Ermittlung einer Position eines Transportmittels sowie mit Magnetspulen ausgerüstetes Statorsegment zur geregelten Bereitstellung eines Magnetfelds auf das Transportmittel, wobei eine Kontrolleinrichtung bei einem Übergang des Transportmittels von dem ersten Statorsegment auf das zweite Statorsegment und/oder bei einem Übergang des Transportmittels von dem zweiten auf das erste Statorsegment eine zeitweilige Umschaltung des zweiten Statorsegments vom geregelten Zustand in einen gesteuerten Zustand vornimmt, wobei die Kontrolleinrichtung bei der geregelten Einleitung von elektrischer Energie an das zweite Statorsegment eine elektrische Wechselspannung für die Magnetspulen derart bereitstellt, dass sich längs einer Bewegungsbahn des Transportmittels ein Phasenwinkel von 90 Grad zwischen einem an das zweite Statorsegment bereitgestellten Wirkstromanteil und einer Position eines magnetischen Wirkzentrums der Permanentmagnetanordnung des Transportmittels einstellt und wobei die Kontrolleinrichtung bei einer Annäherung des Transportmittels an einen Übergang zwischen einem zweiten und einem ersten Statorsegment zur Umschaltung zwischen der geregelten Einleitung von elektrischer Energie und der gesteuerten Einleitung von elektrischer Energie in das zweite Statorsegment eine Veränderung des Phasenwinkels zwischen dem an das zweite Statorsegment bereitgestellten Wirkstromanteil und der Position des magnetischen Wirkzentrums der Permanentmagnetanordnung des Transportmittels um 90 Grad vornimmt.

Dabei können die ersten und die zweiten Statorsegmente in beliebiger Reihenfolge längs der Bewegungsbahn aneinander gereiht werden und es können ein oder mehrere Transportmittel gleichzeitig längs der Bewegungsbahn unter der Aufsicht der Kontrolleinrichtung auf den Statorsegmenten bewegt werden. Exemplarisch kann vorgesehen werden, dass die zweiten Statorsegmente in denjenigen Abschnitten der Bewegungsbahn vorgesehen werden, wo eine exakte Kenntnis über die Position des jeweiligen Transportmittels und/oder eine Ausnutzung des magnetischen Feldes durch das Transportmittel mit hohem Wirkungsgrad erforderlich ist. Eine exakte Kenntnis über die Position des Transportmittels kann beispielsweise erforderlich sein, wenn das Transportmittel einen Behälter transportiert, der an einer Befüllungsstation mit einem Füllgut befüllt werden soll. Hierzu kann beispielsweise eine Abbremsung des Transportmittels bis zum Stillstand bei exakter Einhaltung einer vorgegebenen Befüllungsposition und/oder nach Beendigung des Befüllungsvorgangs eine ruckfreie Beschleunigung auf eine vorgebbare Zielgeschwindigkeit notwendig sein. Eine besonders effiziente Ausnutzung des magnetischen Feldes, das von den Statorsegmenten durch entsprechende Bereitstellung elektrischer Energie ausgesendet wird, ist insbesondere dann von Bedeutung, wenn ein erhöhter Bewegungswiderstand für das Transportmittel zu erwarten ist. Demgegenüber können erste Statorsegmente, bei denen lediglich eine gesteuerte Fortbewegung der Transportmittel längs der Bewegungsbahn vorgesehen ist, längs derjenigen Abschnitte der Bewegungsbahn vorgesehen werden, bei denen beispielsweise eine gleichförmige Bewegung der Transportmittel ohne exakte Kenntnis der Position des jeweiligen Transportmittels ausreichend ist. Durch den abschnittsweisen geregelten und gesteuerten Betrieb der jeweiligen Statorsegmente kann eine erhebliche Vereinfachung der Linearmotoranordnung erreicht werden, da in den ersten Statorsegmenten auf ein Wegmesssystem verzichtet werden kann. Ferner ergibt sich durch einen Verzicht auf eine Regelung sämtlicher Statorsegmente längs der Bewegungsbahn auch eine Vereinfachung für die Kontrolleinrichtung, da weniger Positionssignale der Wegmesssysteme verarbeitet werden müssen. Ferner ist ein Einschleifen und/oder ein Ausschleifen von Transportmitteln auf die bzw. von der Bewegungsbahn entlang von ersten, nur gesteuerten Statorsegmenten einfacher durchführbar als bei geregelten Statorsegmenten, da ein An- bzw. Abmelden der jeweiligen Transportmittel bei dem jeweils zugehörigen Regelalgorithmus der Kontrolleinrichtung entfallen kann.

Durch die Umschaltung des zweiten Statorsegments von einer geregelten Betriebsweise auf eine gesteuerte Betriebsweise bei Annäherung eines Transportmittels an einen Übergang zwischen einem ersten und einem zweiten Statorsegment wird eine Anpassung der Charakteristika der sich längs der Bewegungsbahn fortbewegenden, von den jeweiligen Statorsegmenten erzeugten Magnetfelder erleichtert. Die Kontrolleinrichtung kann den jeweils ablaufenden Regelalgorithmus für das entsprechende Statorsegment zeitweilig außer Betrieb setzen, so dass damit eine komplexe Einflussnahme auf den Regelalgorithmus, insbesondere zur Anpassung von Ansteuerfrequenz und Phasenwinkel des Ansteuersignals für das zweite Statorsegment auf das Ansteuersignal des ersten Statorsegments, entfallen kann. Dadurch kann von der Kontrolleinrichtung mit einem überschaubaren Aufwand eine zumindest nahezu ruckfreie Überleitung des jeweiligen Transportmittels von einem grundsätzlich geregelten und nur ausnahmsweise gesteuerten Abschnitt der Bewegungsbahn auf einen stets nur gesteuerten Abschnitt der Bewegungsbahn gewährleistet werden. Ferner kann dadurch von der Kontrolleinrichtung eine zumindest nahezu ruckfreie Überleitung des jeweiligen Transportmittels von einem stets nur gesteuerten Abschnitt der Bewegungsbahn auf einen grundsätzlich geregelten und nur ausnahmsweise gesteuerten Abschnitt der Bewegungsbahn gewährleistet werden.

Dabei stellt die Kontrolleinrichtung bei der geregelten Einleitung von elektrischer Energie an das zweite Statorsegment eine elektrische Wechselspannung für die Magnetspulen derart bereit, dass sich längs einer Bewegungsbahn des Transportmittels ein Phasenwinkel von 90 Grad zwischen einem an das zweite Statorsegment bereitgestellten Wirkstromanteil und einer Position eines magnetischen Wirkzentrums der Permanentmagnetanordnung des Transportmittels einstellt. Bei einem derartigen Phasenwinkel stellt sich die maximale resultierende Magnetkraft zwischen der magnetischen Welle, die von den im Statorsegment angeordneten und mit elektrischer Energie versorgten Magnetspulen abgegeben wird und der Permanentmagnetanordnung, die am Transportmittel ausgebildet ist, ein. Das magnetische Wirkzentrum der Permanentmagnetanordnung ist als Analogie zu einem Schwerpunkt einer Masse zu sehen und kennzeichnet denjenigen Ort, an dem die Magnetfelder der, vorzugsweise aus gegensinnig gepolt aneinandergereihten Stabmagneten gebildeten, Permanentmagnetanordnung modellhaft zu einem einzigen Magnetpol zusammengefasst werden können. Ein Phasenwinkel von 90 Grad zwischen dem Wirkstromanteil und dem magnetischen Wirkzentrum ist beispielsweise dann gegeben, wenn eine Energieversorgung des Statorsegments mit einem sinusförmigen elektrischen Strom erfolgt und die Position des magnetischen Wirkzentrums längs der Bewegungsbahn um ein Viertel der sich dabei einstellenden Wellenlänge (Lambda/4) für die magnetische Welle phasenverschoben ist.

Bei einer Weiterbildung des Verfahrens ist vorgesehen, dass die Kontrolleinrichtung bei der gesteuerten Einleitung von elektrischer Energie an das erste Statorsegment einen Wechselstrom mit einer vorgebbaren, von einer Zielgeschwindigkeit des Transportmittels abhängigen Frequenz an die Magnetspulen bereitstellt und/oder eine Regelung eines Nennstroms für die Magnetspulen vornimmt. Bei der gesteuerten Einleitung der elektrischen Energie, bei der die Kontrolleinrichtung aufgrund des fehlenden Wegmesssystems im ersten Statorsegment keine Kenntnis über die tatsächliche Position des Transportmittels hat, stellt sich die Geschwindigkeit des Transportmittels in Abhängigkeit von der Bewegungsgeschwindigkeit der magnetischen Welle ein, die durch die Anregung des ersten Statorsegments mit elektrischem Wechselstrom hervorgerufen wird. Durch Einflussnahme auf die Frequenz des Wechselstroms kann somit die Geschwindigkeit des Transportmittels eingestellt werden. In der Praxis kann angenommen werden, dass das magnetische Wirkzentrum im gesteuerten Betrieb des Statorsegments einen Phasenwinkel von ungefähr 90 Grad gegenüber dem sich durch die Beaufschlagung des Statorsegments mit elektrischer Spannung einstellenden Wirkstromanteil am Statorsegment einnimmt und somit zumindest im Wesentlichen phasengleich zum Blindstromanteil liegt. Vorzugsweise findet für das erste Statorsegment eine Regelung des elektrischen Stroms, der durch die Magnetspulen fließt, durch die Kontrolleinrichtung statt, um Inhomogenitäten in den magnetischen Wellen, die zu unerwünschten Geschwindigkeitsschwankungen für das Transportmittel führen könnten, zu vermeiden.

Erfindungsgemäß nimmt die Kontrolleinrichtung bei einer Annäherung des Transportmittels an einen Übergang zwischen einem zweiten und einem ersten Statorsegment zur Umschaltung zwischen der geregelten Einleitung von elektrischer Energie und der gesteuerten Einleitung von elektrischer Energie in das zweite Statorsegment eine Veränderung des Phasenwinkels zwischen dem an das zweite Statorsegment bereitgestellten Wirkstromanteil und der Position des magnetischen Wirkzentrums der Permanentmagnetanordnung des Transportmittels um 90 Grad vor. Durch diese Anpassung des Phasenwinkels wird bereits vor der Umschaltung auf den gesteuerten Betrieb des zweiten Statorsegments eine Position für das magnetische Wirkzentrum gegenüber der vom zweiten Statorsegment bereitgestellten magnetischen Welle erreicht, die zumindest nahezu der sich nach der Umschaltung auf den gesteuerten Betrieb des zweiten Statorsegments einstellenden Position des magnetische Wirkzentrums gegenüber der magnetischen Welle entspricht. Hierdurch wird bei der Umschaltung zwischen dem geregelten und dem gesteuerten Betrieb für das zweite Statorsegment erreicht, dass bei der Umschaltung keine Sprungfunktion für das magnetische Wanderfeld und somit auch keine unerwünschte ruckartige Beschleunigung oder Abbremsung des Transportmittels auftritt.

Bevorzugt nimmt die Kontrolleinrichtung für eine Bewegung des Transportmittels über den Übergang zwischen dem zweiten und dem ersten Statorsegment eine frequenzgleiche und phasengleiche Steuerung des ersten und des zweiten Statorsegments vor. Dabei muss zur Gewährleistung der phasengleichen Steuerung der beiden Statorsegmente ein Abstand zwischen der letzten Magnetspule des längs der Bewegungsbahn vorausgehenden Statorsegments und der ersten Magnetspule des längs der Bewegungsbahn nachfolgenden Statorsegments in die Berechnung der jeweiligen Ansteuerspannungen mit einbezogen werden, um am Übergang zwischen den Statorsegmenten sicherzustellen, dass sich die beiden magnetischen Wanderfelder der Statorsegmente überdecken.

Vorteilhaft ist es, wenn die Kontrolleinrichtung nach Veränderung des Phasenwinkels um 90 Grad zur Durchführung der Umschaltung auf die gesteuerte Einleitung von elektrischer Energie auf das zweite Statorsegment einen Regelalgorithmus für eine Regelung des Lageistwerts des Transportmittels und/oder einen Algorithmus für eine Positionsermittlung für das Transportmittel deaktiviert. Hierdurch wird beispielsweise sichergestellt, dass im Regelalgorithmus während der Phase der gesteuerten Ansteuerung des zweiten Statorsegments keine Regelabweichungen gespeichert werden, die bei einer neuerlichen Verwendung des Regelalgorithmus zunächst zu einem unerwünschten, beispielsweise sprunghaften, Reglerverhalten führen könnten.

Bei einer vorteilhaften Weiterbildung des Verfahrens aktiviert die Kontrolleinrichtung für eine Umschaltung zwischen der gesteuerten Einleitung von elektrischer Energie und der geregelten Einleitung von elektrischer Energie in das zweite Statorsegment einen Algorithmus für eine Positionsermittlung für das Transportmittel und reduziert innerhalb einer vorgebbaren Zeitspanne, die wenigstens zwei Regelzyklen der Kontrolleinrichtung umfasst, eine Differenz zwischen einem Lagesollwert für das Transportmittel und einem Lageistwert für das Transportmittel derart, dass der Lageistwert am Ende der Zeitspanne zumindest im Wesentlichen dem Lagesollwert entspricht. Die vorzugsweise in einem ersten Schritt bei der Umschaltung aus dem gesteuerten in den geregelten Betrieb erfolgende Aktivierung des Algorithmus für die Positionsermittlung dient dazu, einen Lageistwert des Transportmittels zu bestimmen. Bei dem Lageistwert kann es sich beispielsweise um einen tatsächlichen Phasenwinkel zwischen dem magnetischen Wirkzentrum und dem während des geregelten Betriebs an das zweite Statorsegment bereitgestellten Wirkstromanteil handeln. Anschließend wird die Differenz zwischen dem Lageistwert und einem vorgebbaren Lagesollwert, beispielsweise einem Phasenwinkel von 90 Grad, ermittelt. Um eine ruckartige Bewegung des Transportmittels bei der Umschaltung auf den geregelten Betrieb des zweiten Statorsegments zu vermeiden, wird die Ausregelung der ermittelten Differenz zwischen Lageistwert und Lagesollwert auf wenigstens zwei Regelzyklen der Kontrolleinrichtung verteilt. Bei der Vorgabe der Anzahl von Regelzyklen, innerhalb derer eine zumindest nahezu vollständige Angleichung des Lageistwerts an den Lagesollwert erfolgen soll, sind insbesondere die Masse der Transportmittel, die maximale elektrische Belastbarkeit der Magnetspulen und die Flussdichte der Permanentmagnetanordnung sowie die Frequenz der Regelung zu berücksichtigen, um unerwünschte ruckartige Bewegungen des Transportmittels beim Umschaltvorgang zu verhindern.

Zweckmäßig ist es, wenn für die Reduzierung der Differenz zwischen dem Lagesollwert für das Transportmittel und dem Lageistwert für das Transportmittel von der Kontrolleinrichtung zu Beginn der Umschaltung zwischen der gesteuerten und der geregelten Einleitung der elektrischen Energie in das zweite Statorsegment von der Kontrolleinrichtung eine Rücksetzung wenigstens eines Integral-Anteils wenigstens eines Regelalgorithmus für eine Regelung der Position und Geschwindigkeit des Transportmittels auf einen vorgebbaren Wert, insbesondere Null, vorgenommen wird und/oder von der Kontrolleinrichtung ausgehend von einer abgesenkten Strombegrenzungsschwelle eine Anhebung der Strombegrenzungsschwelle für das zweite Statorsegment über mehrere Reglerzyklen hinweg vorgenommen wird. Der Integral-Anteil des Regelalgorithmus summiert die Regelabweichungen auf, die innerhalb der aufeinander folgenden Regelzyklen durch Differenzbildung zwischen dem Lageistwert und dem Lagesollwert ermittelt werden und führt innerhalb einer von den Eigenschaften der Linearmotoranordnung abhängigen Nachstellzeit zur zumindest nahezu vollständigen Angleichung zwischen Lageistwert und Lagesollwert. Ergänzend oder alternativ kann zur Vermeidung von ruckartigen Bewegungen des Transportmittels bei der Umschaltung vom gesteuerten Betrieb auf den geregelten Betrieb des Statorsegments vorgesehen werden, eine Strombegrenzungsschwelle für die Magnetspulen in dem Statorsegment zunächst, insbesondere zum Zeitpunkt der Umschaltung, abzusenken und anschließend über mehrere Regelzyklen hinweg wieder anzuheben und damit zu Beginn des Regelungsvorgangs den Aufbau eines zu großen magnetischen Potentials zwischen dem Statorsegment und der Permanentmagnetanordnung des Transportmittels zu verhindern.

Gemäß einem zweiten Aspekt der Erfindung wird die erfindungsgemäße Aufgabe mit einer Linearmotoranordnung nach Anspruch 7 gelöst.

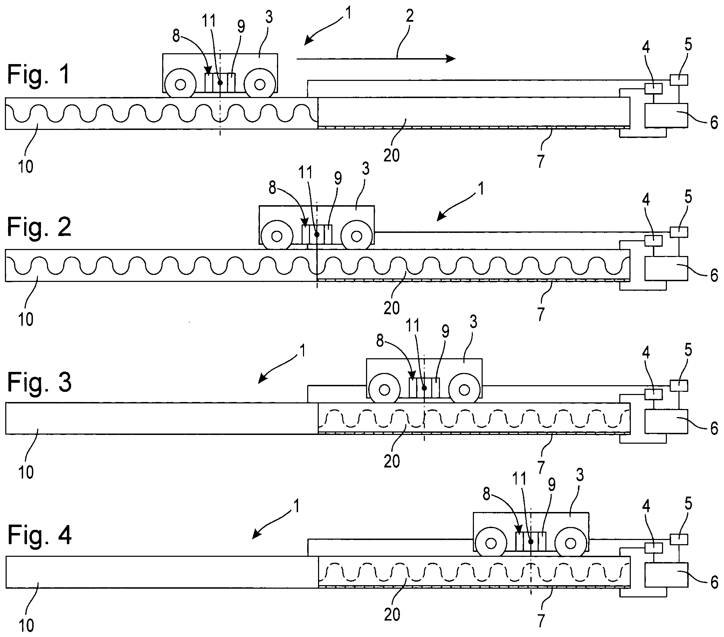

Vorteilhaft ist es, wenn ein Statorsegment mehrere, vorzugsweise in gleicher Teilung längs der Bewegungsbahn angeordnete, Magnetspulen umfasst, wobei benachbart angeordnete Magnetspulen derart ausgebildet sind, dass sie bei einer gemeinsamen Ansteuerung durch ein Steuergerät einander entgegengesetzte Magnetfelder bereitstellen. Durch die mechanische und elektrische Zusammenfassung mehrerer Magnetspulen in einem Statorsegment kann sowohl eine kostengünstige mechanische Aufbauweise als auch eine einfache elektrische Ansteuerung des jeweiligen Statorsegments erreicht werden.
Eine vorteilhafte Ausführungsform der Erfindung ist in der Zeichnung dargestellt.
Hierbei zeigen die Figuren 1 bis 4 einen Übergang eines Transportmittels von einem gesteuert betriebenen Statorsegment auf ein grundsätzlich geregelt und kurzzeitig gesteuert betriebenes Statorsegment.

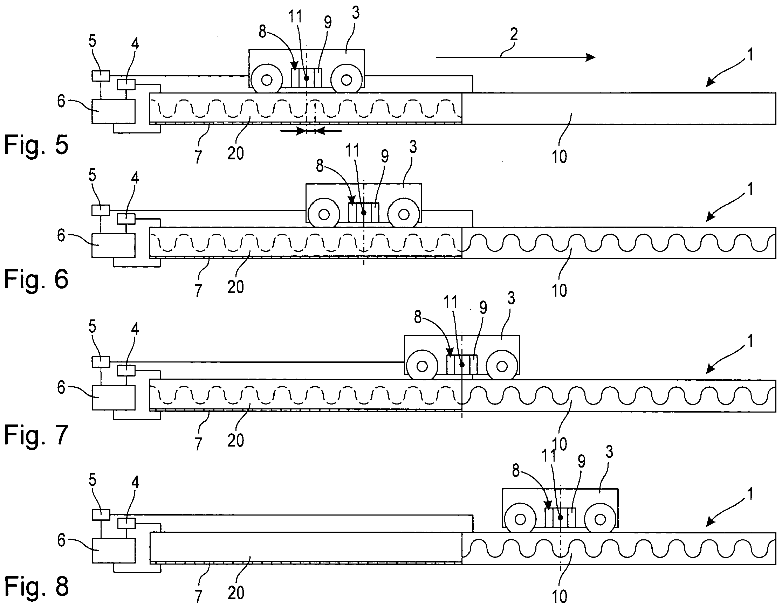

Die Figuren 5 bis 8 zeigen einen Übergang eines Transportmittels von einem grundsätzlich geregelt und kurzzeitig gesteuert betriebenen Statorsegment auf ein gesteuert betriebenes Statorsegment.

In der Figur 1 ist ein Abschnitt einer Linearmotoranordnung 1 dargestellt, die exemplarisch mehrere, längs einer Bewegungsbahn 2 aneinander gereihte Statorsegmente 10, 20, wenigstens ein längs der Bewegungsbahn 2 relativbeweglich zu den Statorsegmenten 10, 20 bewegliches Transportmittel 3 sowie jeweils den Statorsegmenten 10, 20 zugeordnete, zur Bereitstellung elektrischer Energie ausgebildete Steuergeräte 4,5 und eine Kontrolleinrichtung 6 zur Bereitstellung von Steuersignalen an die Steuergeräte 4, 5 umfasst.

Die Statorsegmente 10, 20 umfassen jeweils mehrere nicht dargestellte, längs der Bewegungsbahn nebeneinander, insbesondere angrenzend aneinander, angeordnete Magnetspulen, die elektrisch und mechanisch in dem jeweiligen Statorsegment 10, 20 aufgenommen sind. Die Magnetspulen sind beispielsweise derart ausgebildet, dass Windungsebenen von Wicklungen der Magnetspulen jeweils parallel zu einem Abschnitt der Bewegungsbahn 2 und senkrecht zu einer Darstellungsebene der Figuren 1 bis 8 ausgerichtet sind. Die Magnetspulen sind ferner derart elektrisch miteinander verbunden, dass sämtliche Magnetspulen eines Statorsegments 10, 20 zeitgleich mit elektrischer Energie, insbesondere mit einer gemeinsamen elektrischen Spannung, versorgt werden können und dass dabei benachbart angeordnete Magnetspulen einander entgegengesetzte Magnetfelder abgeben. Dies kann beispielsweise durch gegensinnige elektrische Polung benachbarter Magnetspulen oder durch eine gegensinnige Wicklung der Windungen der benachbarten Magnetspulen erreicht werden. Durch eine Beaufschlagung der Magnetspulen der jeweiligen Statorsegmente 10, 20 mit einem elektrischen Wechselstrom kann ein magnetisches Wanderfeld erzeugt werden, das sich in Richtung der Bewegungsbahn 2 bewegt und das durch Wechselwirkung mit einer Permanentmagnetanordnung 8 am Transportmittel 3 zur Bereitstellung einer Vortriebskraft auf das Transportmittel 3 führt. Die Bewegungsgeschwindigkeit des Transportmittels 3 wird dabei von einer Frequenz des magnetischen Wanderfelds bestimmt.

Die Permanentmagnetanordnung 8 am Transportmittel 3 umfasst exemplarisch vier quaderförmige Stabmagnete 9, deren größte Ausdehnung sich normal zur Darstellungsebene der Figuren 1 bis 8 erstreckt und die längs der Bewegungsbahn 2 aneinander gereiht sind. Dabei sind die Stabmagnete 9 derart angeordnet, dass benachbarte Stabmagnete 9 einander entgegengesetzte Polungen aufweisen. Somit treten an den in den Figuren 1 bis 8 sichtbaren Stirnseiten der Stabmagnete 9 jeweils einander entgegengesetzte Magnetfeldlinien aus. Exemplarisch ist im geometrischen Zentrum der Permanentmagnetanordnung 9 ein magnetisches Wirkzentrum 11 eingezeichnet, das denjenigen Punkt symbolisiert, an dem die magnetischen Feldlinien der Stabmagnete 9 modellhaft zusammengefasst werden können. Dieses magnetische Wirkzentrum 11 wird insbesondere bei der Ermittlung des Phasenwinkels für die elektrische Beaufschlagung der Statorsegmente 10, 20 in Betracht gezogen.

Die Kontrolleinrichtung 6 ist für eine gesteuerte Bereitstellung elektrischer Energie an das erste Statorsegment 10 ausgebildet. Vorzugsweise wird das erste Statorsegment 10 mit einer elektrischen Wechselspannung beaufschlagt, deren Frequenz vorgebbar ist und an unterschiedliche Betriebsbedingungen für das erste Statorsegment 10 angepasst werden kann. Die Amplitude der elektrischen Wechselspannung, die den Stromfluss durch die Magnetspulen des ersten Statorsegments 10 bestimmt, kann ebenfalls anhand eines vorgebbaren Werts eingestellt werden. Exemplarisch ist jedoch eine Regelung der Amplitude der elektrischen Wechselspannung, insbesondere anhand einer Überwachung des Spulenstroms durch die Magnetspulen, für das erste Statorsegment 10 vorgesehen.

Das zweite Statorsegment 20 unterscheidet sich vom ersten Statorsegment 10 durch ein Wegmesssystem 9, das mit der Kontrolleinrichtung 6 elektrisch verbunden ist und das in Abhängigkeit von der Position des Transportmittels 3 längs der Bewegungsbahn 2 ein Positionssignal erzeugt. Exemplarisch ist das Wegmesssystem 9 als magnetostriktives Wegmesssystem ausgebildet, das für eine Wechselwirkung mit einem nicht dargestellten, am Transportmittel 3 angebrachten Permanentmagneten ausgebildet ist und bei dem eine Signallaufzeit durch das Wegmesssystem 9 als Maß für die Position des Transportmittels 3 herangezogen wird.

Mit Hilfe des Wegmesssystems 9 kann die Kontrolleinrichtung 6 die Position des Transportmittels 3 längs desjenigen Abschnitts der Bewegungsbahn 2 regeln, der sich entlang des zweiten Statorsegments 20 erstreckt. Bei dieser Regelung dient der Kontrolleinrichtung 6 eine Differenz zwischen einem Lageistwert, also einer tatsächlichen Position des Transportmittels 3 längs der Bewegungsbahn 2, und einem Lagesollwert, also einer erwarteten Position des Transportmittels 3 zu einem vorgegebenen Zeitpunkt, als Regelabweichung, die mittels des in der Kontrolleinrichtung 6 ablaufenden Regelalgorithmus über einen oder mehrere Regelzyklen minimiert werden soll.

Vorzugsweise ist der Regelalgorithmus derart ausgebildet, dass die Position des Transportmittels 3, insbesondere die Position des magnetischen Wirkzentrums 11 des Transportmittels 3, gegenüber der vom zweiten Statorsegment bereitgestellten magnetischen Wanderwelle derart angesiedelt ist, dass stets ein Phasenwinkel von 90 Grad zwischen dem elektrischen Wirkstrom durch die Magnetspulen und dem magnetischen Wirkzentrum 11 des Transportmittels 3 eingehalten wird. Dies ist in der nachstehend noch näher beschriebenen Figur 5 dadurch symbolisiert, dass ein Abstand zwischen einem oberen Scheitelpunkt des exemplarisch als Sinuswelle dargestellten elektrischen Stroms für das zweite Statorsegment 20 und dem magnetischen Wirkzentrum 11 des Transportmittels 3 einem Viertel (Lambda/4) der Wellenlänge (Lambda) der magnetischen Wanderwelle entspricht. Der nicht eingezeichnete Wirkstromanteil ist phasengleich zum Spannungsverlauf an den Magnetspulen, der nicht eingezeichnete Blindstromanteil weist einen Phasenwinkel von 90 Grad gegenüber der Spannung und dem Wirkstromanteil auf.

Bei dem in den Figuren 1 bis 4 dargestellten Übergang des Transportmittels 3 von dem gesteuert betriebenen ersten Statorsegment 10 auf das grundsätzlich geregelt betriebene Statorsegment 20 kann die nachfolgende Vorgehensweise vorgesehen werden. Das Transportmittel 3 bewegt sich aufgrund der vom ersten Statorsegment 10 durch Beaufschlagung der Magnetspulen mit elektrischer Energie ausgesendeten magnetischen Wanderwelle längs der Bewegungsbahn 2. Bei Annahme eines verschwindenden Bewegungswiderstands für die Bewegung des Transportmittels 3 längs des Statorsegments 10 beträgt ein Phasenwinkel zwischen der exemplarisch als Sinuswelle dargestellten, vom Steuergerät 4 an das erste Statorsegment bereitgestellten elektrischen Spannung und dem magnetischen Wirkzentrum 11 des Transportmittels 3 nur wenige Grad oder idealerweise 0 Prozent der Wellenlänge (Lambda) der magnetischen Wanderwelle, wie dies in der Figur 1 dargestellt ist. Aus der Figur 1 geht auch hervor, dass das zweite Statorsegment 20 bei ausreichendem Abstand des Transportmittels 3 von einem Übergang zwischen erstem und zweiten Statorsegment 10, 20 nicht mit einer elektrischen Spannung beaufschlagt werden muss.

Bei Annäherung des Transportmittels 3 an den Übergang zwischen dem ersten und dem zweiten Statorsegment 10, 20 wird das zweite Statorsegment 20 von der Kontrolleinrichtung 6 zunächst in einer gesteuerten Betriebsweise aktiviert. Hierbei steuert die Kontrolleinrichtung 6 das zweite Statorsegment 20 mit Hilfe des Steuergeräts 5 zunächst derart mit elektrischer Spannung an, dass sich am zweiten Statorsegment 20 exemplarisch ein frequenz-, phasen- und amplitudengleicher Stromverlauf einstellt. Damit soll sichergestellt werden, dass die magnetischen Wanderwellen der beiden Statorsegmente 10, 20 deckungsgleich sind. Hierdurch kann das Transportmittel 3 ruckfrei den Übergang zwischen dem ersten und dem zweiten Statorsegment 10, 20 passieren.

Da jedoch das zweite Statorsegment 20 grundsätzlich für einen geregelten Betrieb ausgebildet ist und ein solcher geregelter Betrieb für manche Bewegungsabläufe, beispielsweise zur Ansteuerung einer bestimmten Position längs der Bewegungsbahn 2 und/oder zur Einhaltung einer vorgebbaren Bewegungsgeschwindigkeit, erforderlich ist, ist eine Umschaltung des zweiten Statorsegments 20 vom gesteuerten auf den geregelten Betrieb vorgesehen. Hierzu wird in einem ersten Schritt von der Kontrolleinrichtung 6 das Wegmesssystem 7 aktiviert. Anhand eines vom Wegmesssystem 7 bereitgestellten Wegsignals kann anschließend mit Hilfe eines in der Kontrolleinrichtung 6 ablaufenden Algorithmus die Position des Transportmittels 3, insbesondere die Position des magnetischen Wirkzentrums 11, längs des zweiten Statorsegments 20 bestimmt werden. Anschließend wird ein in der Kontrolleinrichtung 6 ablaufender Regelalgorithmus aktiviert, der anhand der Differenz zwischen dem Lageistwert für das Transportmittel 3 und dem Lagesollwert für das Transportmittel 3 eine Regelabweichung bestimmt. Diese Regelabweichung wird anschließend durch entsprechende Einflussnahme der Kontrolleinrichtung 6 auf die Frequenz und Amplitude des an die Magnetspulen des zweiten Statorsegments 20 bereitzustellenden elektrischen Wechselstroms innerhalb einer vorgebbaren Zeitspanne, beispielsweise innerhalb mehrerer Regelzyklen. minimiert. Als Ergebnis der Minimierung der Regelabweichung wird der bereits beschriebene Zustand angestrebt, bei dem zwischen dem Wirkstromanteil durch die Magnetspulen des zweiten Statorsegments 20 und dem magnetischen Wirkzentrum 11 der Permanentmagnetanordnung 8 ein Phasenwinkel von 90 Grad eingehalten wird.

Um hierbei ruckartige Bewegungen des Transportmittels 3 zu vermeiden, kann exemplarisch vorgesehen werden, einen Integral-Anteil im Regelalgorithmus zum Zeitpunkt der Umschaltung zwischen gesteuertem und geregeltem Betrieb des zweiten Statorsegments 20 auf einen vorgegebenen Wert, insbesondere auf Null, zu setzen. Dadurch kann erreicht werden, dass der Regelalgorithmus für eine Angleichung des Lageistwerts an den Lagesollwert mehrere Regelzyklen benötigt und somit eine sprunghafte Änderung des Bewegungszustands des Transportmittels 3 vermieden wird.

Ergänzend oder alternativ kann vorgesehen werden, die Amplitude des an die Magnetspulen des zweiten Statorsegments 20 bereitgestellten elektrischen Stroms bei der Umschaltung vom gesteuerten auf den geregelten Betrieb des zweiten Statorsegments 20 auf einen vorgebbaren ersten Wert zu begrenzen und anschließend innerhalb einer vorgebbaren Anzahl von Regelzyklen auf einen zweiten, höheren Wert anzuheben. Dadurch wird eine Begrenzung des Wirkstroms und somit einer auf das Transportmittel 3 einwirkenden Magnetkraft erreicht. Durch diese zeitabhängige Anhebung der Strombegrenzungsschwelle für die Magnetspulen wird eine zunehmende Erhöhung der Magnetkraft über einen vorgebbaren Zeitraum erreicht, so dass ein gleichmäßiger Übergang für die Bewegung des Transportmittels 3 aus dem gesteuerten Zustand in den geregelten Zustand erfolgen kann.

Ergänzend oder alternativ kann auch vorgesehen werden, dass der Regelalgorithmus zum Zeitpunkt der Umschaltung vom gesteuerten auf den geregelten Betrieb des zweiten Statorsegments 20 eine Berechnung der notwendigen Beschleunigung oder Abbremsung durchführt, die notwendig ist, um den angestrebten Lagesollwert zu erreichen und anhand einer vorgebbaren Maximalbeschleunigung für das Transportmittel 3 die Anzahl der Regelzyklen und/oder die Anhebung der Strombegrenzungsschwelle derart einstellt, dass die Maximalbeschleunigung nicht überschritten wird.

Bei dem in den Figuren 5 bis 8 dargestellten Übergang des Transportmittels 3 vom zweiten, geregelten Statorsegment 20 auf das erste, gesteuerte Statorsegment 10 wird zunächst die Vorgabe des Phasenwinkels von 90 Grad zwischen dem Wirkstromanteil für die Magnetspulen und dem magnetischen Wirkzentrum 11 der Permanentmagnetanordnung 8 dahingehend abgeändert, dass ein Phasenwinkel von 180 Grad oder von 0 Grad erreicht wird, wie dies in der Figur 6 dargestellt ist. Somit wird das Transportmittel 3 zumindest im Wesentlichen phasengleich mit dem Blindstromanteil der Magnetspulen des zweiten Statorsegments 20 bewegt.

Anschließend beginnt die Kontrolleinrichtung 6 mit der Ansteuerung des ersten Statorsegments 10. Hierbei werden insbesondere die Frequenz und/oder die Phase und/oder die Amplitude des an das erste Statorsegment 10 angelegten elektrischen Stroms so gewählt, dass die beiden magnetischen Wanderwellen der aneinandergrenzenden Statorsegmente 20, 10 frequenz- und/oder phasen- und/oder amplitudengleich und somit deckungsgleich sind. In einem nachfolgenden Schritt deaktiviert die Kontrolleinrichtung 6 den Regelalgorithmus und den Algorithmus zur Bestimmung der Position des Transportmittels 3 mittels des Wegmesssystems 9, wodurch die Umschaltung vom geregelten Betrieb auf den gesteuerten Betrieb des zweiten Statorsegments 20 abgeschlossen ist. Da gewährleistet wurde, dass die Wanderwellen der aneinandergrenzenden Statorsegmente 20, 10 deckungsgleich sind, kann das Transportmittel 3 nunmehr ohne unerwünschte ruckartige Beschleunigungen den Übergang zwischen dem zweiten und dem ersten Statorsegment 20, 10 passieren und längs des gesteuert betriebenen Statorsegments 10 weiterbewegt werden.

## Patentansprüche

1. Verfahren zum Betreiben einer Linearmotoranordnung (1), mit den Schritten: gesteuerte Einleitung elektrischer Energie an ein erstes mit Magnetspulen ausgerüstetes Statorsegment (10) zur gesteuerten Bereitstellung eines Magnetfelds an eine Permanentmagnetanordnung (8) eines Transportmittels (3) zur Erzeugung von Antriebskräften, geregelte Einleitung elektrischer Energie an ein zweites, mit einer Messeinrichtung (9) für eine Ermittlung einer Position eines Transportmittels (3) sowie mit Magnetspulen ausgerüstetes Statorsegment (20) zur geregelten Bereitstellung eines Magnetfelds auf das Transportmittel (3), wobei eine Kontrolleinrichtung (6) bei einem Übergang des Transportmittels (3) von dem ersten Statorsegment (10) auf das zweite Statorsegment (20) und/oder bei einem Übergang des Transportmittels (3) von dem zweiten auf das erste Statorsegment (20, 10) eine zeitweilige Umschaltung des zweiten Statorsegments (20) vom geregelten Zustand in einen gesteuerten Zustand vornimmt und wobei die Kontrolleinrichtung (6) bei der geregelten Einleitung von elektrischer Energie an das zweite Statorsegment (20) eine elektrische Wechselspannung für die Magnetspulen derart bereitstellt, dass sich längs einer Bewegungsbahn (2) des Transportmittels (3) ein Phasenwinkel von 90 Grad zwischen einem an das zweite Statorsegment (20) bereitgestellten Wirkstromanteil und einer Position eines magnetischen Wirkzentrums (11) der Permanentmagnetanordnung (8) des Transportmittels (3) einstellt, **dadurch gekennzeichnet, dass** die Kontrolleinrichtung (6) bei einer Annäherung des Transportmittels (3) an einen Übergang zwischen einem zweiten und einem ersten Statorsegment (20, 10) zur Umschaltung zwischen der geregelten Einleitung von elektrischer Energie und der gesteuerten Einleitung von elektrischer Energie in das zweite Statorsegment (20) eine Veränderung des Phasenwinkels zwischen dem an das zweite Statorsegment (20) bereitgestellten Wirkstromanteil und der Position des magnetischen Wirkzentrums (11) der Permanentmagnetanordnung (8) des Transportmittels (3) um 90 Grad vornimmt.

2. Verfahren nach Anspruch 1, **dadurch gekennzeichnet, dass** die Kontrolleinrichtung (6) bei der gesteuerten Einleitung von elektrischer Energie an das erste Statorsegment (10) einen Wechselstrom mit einer vorgebbaren, von einer Zielgeschwindigkeit des Transportmittels (3) abhängigen Frequenz an die Magnetspulen bereitstellt und/oder eine Regelung eines Nennstroms für die Magnetspulen vornimmt.

3. Verfahren nach Anspruch 2, **dadurch gekennzeichnet, dass** die Kontrolleinrichtung (6) für eine Bewegung des Transportmittels (3) über den Übergang zwischen dem zweiten und dem ersten Statorsegment (20, 10) eine frequenzgleiche und phasengleiche Steuerung des ersten und des zweiten Statorsegments (10, 20) vornimmt.

4. Verfahren nach Anspruch 2 oder 3, **dadurch gekennzeichnet, dass** die Kontrolleinrichtung (6) nach Veränderung des Phasenwinkels um 90 Grad zur Durchführung der Umschaltung auf die gesteuerte Einleitung von elektrischer Energie auf das zweite Statorsegment (20) einen Regelalgorithmus für eine Regelung des Lageistwerts des Transportmittels (3) und/oder einen Algorithmus für eine Positionsermittlung für das Transportmittel (3) deaktiviert.

5. Verfahren nach einem der vorhergehenden Ansprüche, **dadurch gekennzeichnet, dass** die Kontrolleinrichtung (6) für eine Umschaltung zwischen der gesteuerten Einleitung von elektrischer Energie und der geregelten Einleitung von elektrischer Energie in das zweite Statorsegment (20) einen Algorithmus für eine Positionsermittlung für das Transportmittel (3) aktiviert und innerhalb einer vorgebbaren Zeitspanne, die wenigstens zwei Regelzyklen der Kontrolleinrichtung (6) umfasst, eine Differenz zwischen einem Lagesollwert für das Transportmittel (3) und einem Lageistwert für das Transportmittel (3) derart reduziert, dass der Lageistwert am Ende der Zeitspanne zumindest im Wesentlichen dem Lagesollwert entspricht.

6. Verfahren nach Anspruch 5, **dadurch gekennzeichnet, dass** für die Reduzierung der Differenz zwischen dem Lagesollwert für das Transportmittel (3) und dem Lageistwert für das Transportmittel (3) von der Kontrolleinrichtung (6) zu Beginn der Umschaltung zwischen der gesteuerten und der geregelten Einleitung der elektrischen Energie in das zweite Statorsegment (20) von der Kontrolleinrichtung (6) eine Rücksetzung wenigstens eines Integral-Anteils wenigstens eines Regelalgorithmus für eine Regelung der Position und Geschwindigkeit des Transportmittels (3) auf einen vorgebbaren Wert, insbesondere Null, vorgenommen wird und/oder von der Kontrolleinrichtung (6) ausgehend von einer abgesenkten Strombegrenzungsschwelle eine Anhebung der Strombegrenzungsschwelle für das zweite Statorsegment (20) über mehrere Reglerzyklen hinweg vorgenommen wird.

7. Linearmotoranordnung, mit mehreren aneinander gereihten Statorsegmenten (10, 20) und mit wenigstens einem längs einer Bewegungsbahn (2) relativbeweglich zu den Statorsegmenten (10, 20) beweglichen Transportmittel (3) sowie jeweils den Statorsegmenten (10, 20) zugeordneten, zur Bereitstellung elektrischer Energie ausgebildeten Steuergeräten (4, 5) und einer Kontrolleinrichtung (6) zur Bereitstellung von Steuersignalen an die Steuergeräte (4, 5), wobei die Statorsegmente (10, 20) für die Bereitstellung ortsveränderlicher Magnetfelder zur Einleitung von Antriebskräften auf die jeweils mit einer Permanentmagnetanordnung (8) ausgestatteten Transportmittel (3) ausgebildet sind, wobei die Kontrolleinrichtung (6) für eine gesteuerte Bereitstellung elektrischer Energie an einem ersten Statorsegment (10) und für eine geregelte Bereitstellung elektrischer Energie an wenigstens einem zweiten, mit einer Messeinrichtung (9) für eine Ermittlung einer Position des Transportmittels (3) ausgestatteten Statorsegment (20) ausgebildet ist, wobei die Kontrolleinrichtung (6) zur Durchführung des Verfahrens nach einem der Ansprüche 1 bis 6 eingerichtet ist.

8. Linearmotoranordnung nach Anspruch 7, **dadurch gekennzeichnet, dass** ein Statorsegment (10, 20) mehrere, vorzugsweise in gleicher Teilung längs der Bewegungsbahn (2) angeordnete, Magnetspulen umfasst, wobei benachbart angeordnete Magnetspulen derart ausgebildet sind, dass sie bei einer gemeinsamen Ansteuerung durch ein Steuergerät (4, 5) einander entgegengesetzte Magnetfelder bereitstellen.

## Claims

1. Method for operating a linear motor assembly (1), comprising the steps of: the open-loop controlled introduction of electric energy to a first stator segment (10) provided with solenoids for the open-loop controlled provision of a magnetic field for a permanent magnet arrangement (8) of a conveying means (3) for the generation of drive forces, and the closed-loop controlled introduction of electric energy to a second stator segment (20) provided with a measuring device (9) for a detection of a position of a conveying means (3) and with solenoids for the closed-loop controlled provision of a magnetic field acting on the conveying means (3), wherein a controlling device (6) effects a temporary switch-over of the second stator segment (20) from the closed-loop controlled state to an open-loop controlled state at a transition of the conveying means (3) from the first stator segment (10) to the second stator segment (20), and/or at a transition of the conveying means (3) from the second stator segment (20) to the first stator segment (10) and wherein the controlling device (6), when introducing electric energy to the second stator segment (20) under closed-loop control, provides an electric AC voltage for the solenoids in such a way that a phase angle of 90 degrees is set along the movement path (2) of the conveying means (3) between an active current component made available to the second stator segment (20) and a position of a magnetic action centre (11) of the permanent magnet arrangement (8) of the conveying means (3), **characterised in that** the controlling device (6) changes the phase angle between the active current component made available to the second stator segment (2) and the position of the magnetic action centre (11) of the permanent magnet arrangement (8) of the conveying means (3) by 90 degrees when the conveying means (3) approaches a transition between a second and a first stator segment (20, 10) for switching between the closed-loop controlled introduction of electric energy and the open-loop controlled introduction of electric energy into the second stator segment (20).

2. Method according to claim 1, **characterised in that** the controlling device (6) provides, when introducing electric energy to the first stator segment (10) under open-loop control, an alternating current with a presettable frequency determined by a target speed of the conveying means (3) to the solenoids and/or regulates a nominal current for the solenoids.

3. Method according to claim 2, **characterised in that** the controlling device (6) performs an equal-frequency and in-phase control of the first and second stator segments (10, 20) for a movement of the conveying means (3) across the transition between the second and the first stator segment (20, 10).

4. Method according to claim 2 or 3, **characterised in that** the controlling device (6), after changing the phase angle by 90 degrees for switching to the open-loop controlled introduction of electric energy into the second stator segment (20), deactivates a control algorithm for controlling the actual position value of the conveying means (3) and/or an algorithm for a position detection for the conveying means (3).

5. Method according to any of the preceding claims, **characterised in that** the controlling device (6) activates, for switching between the open-loop and the closed-loop controlled introduction of electric energy into the second stator segment (20), an algorithm for a position detection for the conveying means (3) and reduces, within a presettable period of time which includes at least two control cycles of the controlling device (6), a difference between a set position value for the conveying means (3) and an actual position value for the conveying means (3) in such a way that the actual position value at least substantially corresponds to the set position value at the end of the period of time.

6. Method according to claim 5, **characterised in that**, for reducing the difference between the set position value for the conveying means (3) and the actual position value for the conveying means (3), the controlling device (6) performs, at the start of the switch-over between the open- and the closed-loop controlled introduction of electric energy into the second stator segment (20), a resetting of at least one integral component of at least one control algorithm for controlling the position and speed of the conveying means (3) to a presettable value, in particular zero, and/or **in that** the controlling device (6), starting from a reduced current-limiting threshold, raises the current-limiting threshold for the second stator segment (20) across several control cycles.

7. Linear motor assembly, comprising a plurality of lined-up stator segments (10, 20) and at least one conveying means (3) movable relative to the stator segments (10, 20) along a movement path (2), as well as control units (4, 4) assigned to the stator segments (10, 20) and designed for providing electric energy, and a controlling device (6) for providing control signals to the control units (4, 5), wherein the stator segments (10, 20) are designed for the provision of movable magnetic fields for introducing drive forces into the conveying means (3), each of which is equipped with a permanent magnet arrangement (8), and wherein the controlling device (6) is designed for an open-loop controlled provision of electric energy to a first stator segment (10) and for a closed-loop controlled provision of electric energy to at least one second stator segment (20) equipped with a measuring device (9) for a determination of a position of the conveying means (3), wherein the controlling device (6) is designed to perform the method according to one of the claims 1 to 6.

8. Linear motor assembly according to claim 7, **characterised in that** a stator segment (10, 20) comprises a plurality of solenoids which are preferably spaced evenly along the movement path (2), wherein adjacent solenoids are designed such that they provide opposing magnetic fields when controlled collectively by a control unit (4, 5).

## Revendications

1. Procédé de fonctionnement d'un agencement de moteur linéaire (1), avec les étapes suivantes : application commandée d'énergie électrique au niveau d'un premier segment de stator (10) équipé de bobines magnétiques en vue de la fourniture commandée d'un champ magnétique à un agencement d'aimants permanents (8) d'un moyen de transport (3) en vue de la génération de forces motrices, application régulée d'énergie électrique au niveau d'un second segment de stator (20) équipé d'un dispositif de mesure (9) pour une détermination d'une position d'un moyen de transport (3) ainsi que de bobines magnétiques, en vue de la fourniture régulée d'un champ magnétique au moyen de transport (3), dans lequel un dispositif de contrôle (6) effectue une commutation temporaire du second segment de stator (20) de l'état régulé à un état commandé lors d'un passage du moyen de transport (3) du premier segment de stator (10) au second segment de stator (20) et/ou lors d'un passage du moyen de transport (3) du second au premier segment de stator (20, 10) et dans lequel le dispositif de contrôle (6), lors de l'application régulée d'énergie électrique au niveau du second segment de stator (20), fournit une tension électrique alternative pour les bobines magnétiques de telle sorte que, le long d'une trajectoire de déplacement (2) du moyen de transport (3), un angle de phase de 90 degrés apparaît entre une part de courant actif fournie au second segment de stator (20) et une position d'un centre actif magnétique (11) de l'agencement d'aimants permanents (8) du moyen de transport (3), **caractérisé en ce que** le dispositif de contrôle (6), lors d'un rapprochement du moyen de transport (3) d'un passage entre un second et un premier segment de stator (20, 10) en vue d'une commutation entre l'application régulée d'énergie électrique et l'application commandée d'énergie électrique dans le second segment de stator (20), effectue une modification de l'angle de phase de 90 degrés entre la part de courant actif fournie au second segment de stator (20) et la position du centre actif magnétique (11) de l'agencement d'aimants permanents (8) du moyen de transport (3).

2. Procédé selon la revendication 1, **caractérisé en ce que** le dispositif de contrôle (6), lors de l'application commandée d'énergie électrique au niveau du premier segment de stator (10), fournit aux bobines magnétiques un courant alternatif avec une fréquence prédéterminée qui dépend d'une vitesse cible du moyen de transport (3) et/ou effectue une régulation d'un courant nominal pour les bobines magnétiques.

3. Procédé selon la revendication 2, **caractérisé en ce que** le dispositif de contrôle (6), pour un déplacement du moyen de transport (3) sur le passage entre le deuxième et le premier segment de stator (20, 10), effectue une commande équivalente en fréquence et équivalente en phase du premier et du second segment de stator (10, 20).

4. Procédé selon la revendication 2 ou 3, **caractérisé en ce que** le dispositif de contrôle (6), après la modification de l'angle de phase de 90 degrés en vue de réaliser la commutation sur l'application commandée d'énergie électrique sur le second segment de stator (20), désactive un algorithme de régulation pour une régulation de la valeur de position réelle du moyen de transport (3) et/ou un algorithme pour une détermination de position pour le moyen de transport (3).

5. Procédé selon l'une des revendications précédentes, **caractérisé en ce que** le dispositif de contrôle (6), pour une commutation entre l'application commandée d'énergie électrique et l'application régulée d'énergie électrique dans le second segment de stator (20), active un algorithme pour une détermination de position pour le moyen de transport (3) et, dans l'intervalle d'une période prédéterminée qui comprend au moins deux cycles de régulation du dispositif de contrôle (6), réduit une différence entre une valeur de consigne de position pour le moyen de transport (3) et une valeur de position réelle pour le moyen de transport (3) de telle sorte que la valeur de position réelle correspond au moins sensiblement à la valeur de consigne de position à la fin de la période.

6. Procédé selon la revendication 5, **caractérisé en ce que**, pour la réduction de la différence entre la valeur de consigne de position pour le moyen de transport (3) et la valeur de position réelle pour le moyen de transport (3) par le dispositif de contrôle (6) au début de la commutation entre l'application commandée et régulée de l'énergie électrique dans le second segment de stator (20), le dispositif de contrôle (6) effectue une réinitialisation à une valeur prédéterminée, en particulier zéro, d'au moins une partie intégrale au moins d'un algorithme de régulation pour une régulation de la position et de la vitesse du moyen de transport (3) et/ou le dispositif de contrôle (6), à partir d'un seuil de limitation de courant abaissé, effectue une augmentation du seuil de limitation de courant pour le second segment de stator (20) sur plusieurs cycles de régulateur.

7. Agencement de moteur linéaire, avec plusieurs segments de stator (10, 20) rangés côte à côte et avec au moins un moyen de transport (3) pouvant se déplacer le long d'une trajectoire de déplacement (2) avec une mobilité relative par rapport aux segments de stator (10, 20) ainsi que des appareils de commande (4, 5) affectés respectivement aux segments de stator (10, 20) et réalisés pour la fourniture d'énergie électrique et un dispositif de contrôle (6) pour la fourniture de signaux de commande aux appareils de commande (4, 5), dans lequel les segments de stator (10, 20) sont réalisés pour la fourniture de champs magnétiques mobiles en vue de l'application de forces motrices sur les moyens de transport (3) équipés respectivement d'un agencement d'aimants permanents (8), dans lequel le dispositif de contrôle (6) est réalisé pour une fourniture commandée d'énergie électrique à un premier segment de stator (10) et pour une fourniture régulée d'énergie électrique à au moins un second segment de stator (20) équipé d'un dispositif de mesure (9) pour une détermination d'une position du moyen de transport (3), dans lequel le dispositif de contrôle (6) est conçu pour la réalisation du procédé selon l'une des revendications 1 à 6.

8. Agencement de moteur linéaire selon la revendication 7, **caractérisé en ce qu'**un segment de stator (10, 20) comprend plusieurs bobines magnétiques agencées de préférence à équidistance le long de la trajectoire de déplacement (2), dans lequel des bobines magnétiques agencées de manière adjacente sont réalisées de telle sorte que, lorsqu'elles sont pilotées conjointement par un appareil de commande (4, 5), elles fournissent des champs magnétiques opposés les uns aux autres.
